# EUROPÄISCHE PATENTSCHRIFT

(11) **EP 1 915 553 B1**
(45) Veröffentlichungstag und Bekanntmachung des Hinweises auf die Patenterteilung: **06.01.2010**
(21) Anmeldenummer: 06762820.6
(22) Anmeldetag: 26.07.2006
(51) Int. Cl.: F16H 57/02, F16H 1/28

(54) **ADAPTER, PLANETENGETRIEBE, ANTRIEB UND VERFAHREN**
ADAPTER, PLANETARY GEAR, DRIVE UNIT, AND METHOD
ADAPTATEUR, ENGRENAGE PLANETAIRE, ENTRAINEMENT, ET PROCEDE

(30) Priorität: 10.08.2005 DE 102005038056
(43) Veröffentlichungstag der Anmeldung: 30.04.2008
(73) Patentinhaber: SEW-EURODRIVE GmbH & Co. KG, 76646 Bruchsal (DE)
(72) Erfinder: KASPER, Juergen, 67360 Lingenfeld (DE)
(86) Internationale Anmeldenummer: PCT/EP2006/007372
(87) Internationale Veröffentlichungsnummer: WO 2007/017113

(56) Entgegenhaltungen:
- DE-A1- 10 123 548
- DE-A1- 10 160 685
- DE-A1- 19 855 761
- DE-U1- 29 913 996

## Beschreibung

Die Erfindung betrifft einen Adapter, ein Planetengetriebe, einen Antrieb und ein Verfahren, wie beansprucht in den Ansprüchen 1, 6, 19 und 20.

Aus der DE 101 60 685 ist ein Planetengetriebe bekannt. Bei diesem ist das Sonnenrad mit einer Adapterwelle verbunden, die wiederum mit der Motorwelle kraftschlüssig verbunden ist. Das motorseitige Gehäuseteil ist als Adaptergehäuse zur Aufnahme dieser Verbindung ausgebildet.

Aus der DE 299 13 996 U1 ist ein Getriebe bekannt, bei dem eine Klemmverschraubung für eine Klemmbuchse, die auf einer Motorwelle aufsteckbar ist, vorgesehen ist.

Aus der gattungsgemäßen DE 198 55 761 A1 ist eine Getriebebaueinheit mit speziellem Innenraum bekannt.

Aus der DE 101 23 548 A1 ist ein Umlaufgetriebe mit dreigeteiltem Gehäuse bekannt, wobei der Werkstoff ADI verwendet ist.

Aus der DE 101 60 685 A1 Ist ein Planetengetriebe bekannt, bei dem eine eintriebsseitige Schnittstelle ausgeformt ist zur Verbindung mit weiteren Komponenten.

Darüber hinaus ist die Adapterwelle mittels eines Wälzlagers im Getriebegehäuse gelagert, wobei das Adaptergehäuse ebenfalls zum Getriebegehäuse gezählt werden kann.

Vorteilig ist dabei, dass das Planetengetriebe eigenständig funktionstüchtig ist. Es kann zwar an einen Motor angeschlossen werden, dessen Motorwelle mit der Adapterwelle kraftschlüssig verbindbar ist, es besteht aber auch die Möglichkeit andere Vorrichtungen statt des Motors eintriebsseitig zu verbinden. Die Motorwelle oder die Welle dieser anderen Vorrichtungen kann sogar gelagert werden über das Lager der Adapterwelle. Somit ist ein voll funktionstüchtiges Planetengetriebe beschrieben, das vielseitig verwendbar ist.

Jedoch weist dieses Wälzlager auch Nachteile auf, wie Wärme- und GeräuschentwicKlung und dergleichen.

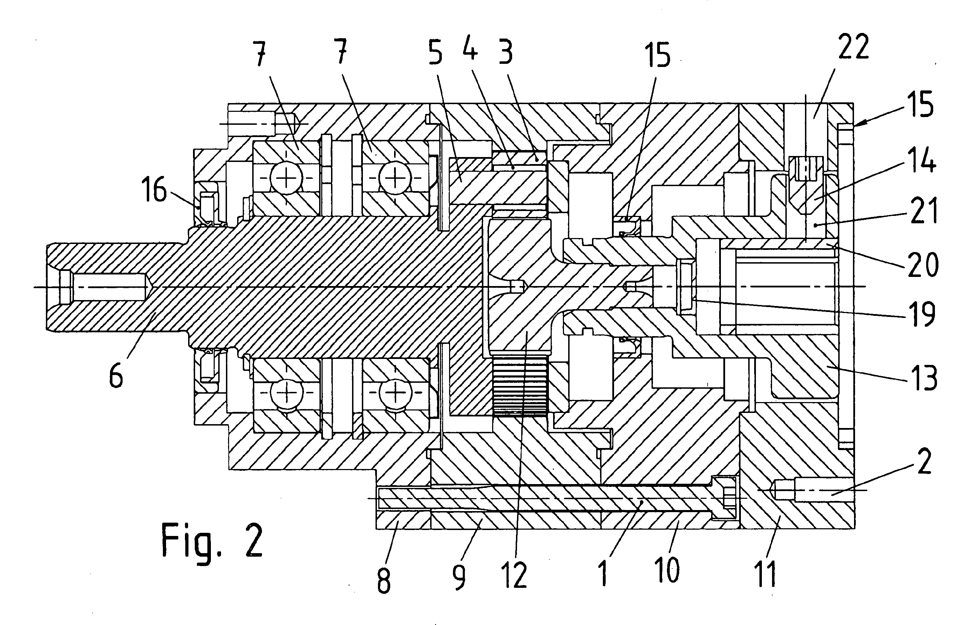

Aus der DE 299 13 996 U1 ist ein Getriebe bekannt, bei dem eine Eingangswelle vorgesehen ist, deren radialer Abstand vom Getriebegehäuse durch wenigsten einen Haltering überbrückt ist und die mittels einer wenigstens eine koaxiale Kugel aufweisenden Stützelements abgestützt ist. Dabei ist ein Langloch 20 für die beiden Schrauben 17 vorgesehen, die axial voneinander beabstandet sind. Denn in Figur 3 beträgt die Lochweite 1,7 cm und Figur 2 und 3 sind maßstabsgetreu offenbart.

Der Erfindung liegt die Aufgabe zugrunde, einen Antrieb und ein Planetengetriebe kostengünstig und leistungsfähiger weiterzubilden.

Erfindungsgemäß wird die Aufgabe bei dem Adapter nach den in Anspruch 1, bei dem Planetengetriebe nach den in Anspruch 6, bei dem Antrieb nach den in Anspruch 19 und bei dem Verfahren nach den in Anspruch 20 angegebenen Merkmalen gelöst.

Wichtige Merkmale der Erfindung bei dem Adapter sind, dass mindestens zwei Befestigungsmittel vorgesehen sind, wobei jedes Befestigungsmittel für sich in einem ersten Zustand zur formschlüssigen, verdrehsichernden und axial verschiebungsrichernden Arretierung der eintreibenden Welle im Gehäuseteil vorgesehen ist, wobei jedes Befestigungsmittel für sich in einem zweiten Zustand zur kraftschlüssigen Verbindung zwischen der eintreibenden Welle mit der weiteren Welle vorgesehen ist, insbesondere wobei die Befestigungsnüitel unabhängig voneinander betätigbar und also vom ersten Zustand über Zwischenzustände in den zweiten Zustand überführbar sind.

Von Vorteil ist dabei, dass die Befestigungsmittel beim Transport, also vor der Montage der weiteren Welle, zum Sichern der eintreibenden Welle im Gehäuse verwendbar sind. Insbesondere ist durch jedes der Befestigungsmittel für sich im ersten Zustand eine Arretierung, also eine Sicherung gegen Verdrehen und axiales Verschieben mit sehr kleinem Spiel, bewirkbar. Somit ist eine Lagerung der eintreibenden Welle oder ein Haltering oder allgemein ein Stützelement verzichtbar und bei Betätigung der Befestigungsmittel ist die eintreibende Welle zu jedem Zeitpunkt in einer definierten Position haltbar.

Somit ist bei der Erfindung im Unterschied zum Stand der Technik eine kombinierte Verdreh- und Verschiebungssicherung erreicht worden. Die Sicherung ist auch funktionstüchtig, wenn das erste Befestigungsmittel im Zwischenzustand zwischen erstem und zweitem Zustand sich befindet, also beispielsweise beim Einschrauben eines Gewindestiftes. Denn das zweite Befestigungsmittel ist währenddessen zur Arrettierung vorgesehen.

Der Adapter kann in vorteilhaften Ausgestaltungen als Kupplung oder als Getriebe, insbesondere Planetengetriebe, ausgebildet und zur Montage an einen weiteren Adapter oder einen Elektromotor vorgesehen sein. In einer Weiterbildung ist der Adapter als Planetengetriebe ausgebildet,
umfassend ein Umlaufräder und/oder Planetenräder antreibendes Sonnenrad,
eine das Sonnenrad oder eine das Sonnenrad antreibende Welle und
ein Gehäuseteil zur Verbindung mit einer das Getriebe antreibenden Vorrichtung, wie Elektromotor, Verbrennungsmotor oder ein mit einem solchen Motor verbundener Adapter oder Kupplung. Von Vorteil ist dabei, dass ein gewichtreduzierter, laufruhigerer und störungsunanfälligerer Getriebemotor verfügbar ist.

Wichtige Merkmale der Erfindung bei dem Planetengetriebe sind, dass
es eintriebsseitig vorkomplettiert ausgebildet ist. Vorkomplettiert bedeutet, dass das Getriebe transportfähig und lagerfähig ist, ohne auseinanderzufallen. Hierzu ist die eintreibende Seite entsprechend präpariert. Die antreibende Welle ist nämlich formschlüssig gehalten im Gehäuseteil. Somit kann sie sich nicht drehen. Vorkomplettierung bedeutet ebenfalls, dass das Getriebe nicht funktionstüchtig ist. Dies liegt also vor. Nach Verbinden mit der antreibenden Vorrichtung wird die Vorkomplettierung aufgehoben und das Getriebe ist bereit. Die Vorkomplettierung ist derart ausgeführt, dass die Funktion des Getriebes nur im Zusammenspiel mit der antreibenden Vorrichtung gegeben ist. Es sind also Funktionen der antreibenden Vorrichtung betriebsnotwendig und/oder es werden durch das oder beim Verbinden oder Betätigen funktionsverhindernde Merkmale aufgehoben oder beseitigt.

Von Vorteil ist bei der Vorkomplettierung, dass das Getriebe lagerfähig und transportfähig ist. Insbesondere sind die durch die Vorkomplettierung arretierten Vorrichtungsteile gegen axiales Verschieben und Verdrehen, vor allem gegen Herausfallen und gegen ein durch Rütteln bewirktes Schlagen der Teile gegen andere Teil erreicht. Die Funktion des Getriebes, nämlich die Drehmomentübersetzung und Drehzahlabersetzung steht erst nach Verbinden mit weiteren Vorrichtungen zur Verfügung, weil Funktionen dieser weiteren Vorrichtung, insbesondere bei der Erfindung eine Lagerfunktion, hinzugefügt und aktiviert werden müssen. Dies bedeutet aber auch, dass das Getriebe selbst kompakter und leistungsfähiger sowie kostengünstiger herstellbar ist.

Alternativ betrifft die Erfindung auch ein Planetengetriebe, welches ein Umlaufräder und/oder Planetenräder antreibendes Sonnenrad,
eine das Sonnenrad oder eine das Sonnenrad antreibende Welle und
ein Gehäuseteil zur Verbindung mit einer das Getriebe antreibenden Vorrichtung, wie Elektromotor, Verbrennungsmotor oder ein mit einem solchen Motor verbundener Adapter oder Kupplung, umfasst, wobei Befestigungsmittel in einem ersten Zustand, also in unbetätigter Position, zur formschlüssigen Verbindung der antreibenden Welle mit dem Gehäuseteil vorgesehen sind,
wobei die Befestigungsmittel in einem zweiten Zustand, also in betätigter Position, zur kraftschlossigen Verbindung zwischen der antreibenden Welle mit einer Welle der antreibenden Vorrichtung vorgesehen sind.

Von Vorteil ist dabei, dass ein Formschluss während des Lagerns und des Transports besteht. Somit fällt das Getriebe nicht auseinander: Nach Verbinden mit einem antreibenden Motor lässt sich die Funktion des Getriebes aktivieren, wobei hierzu ein Kraftschluss zwischen Motorwelle und antreibender Welle des Getriebes, die auch mit dem Sonnenrad verbunden ist, herstellbar ist. Nach Herstellen des zweiten Zustandes, also des Kraftschlusses und Aufheben des Formschlusses, ist das Getriebe betriebsbereit, also die antreibende Welle drehbar.

Wichtiger Vorteil ist bei der Erfindung auch, dass die antreibende Welle nicht im Gehäuseteil des Planetengetriebes gelagert ist. Insbesondere ist beispielsweise die antreibende Welle über das Sonnenrad und die Planetenräder lose gelagert ist und über zumindest ein Lager der antreibenden Vorrichtung fest gelagert ist. Auf diese Weise ist einerseits ein eintriebsseitiges Wälzlager im Getriebe einsparbar mit den zugehörigen Vorteilen, wie Verringerung der Geräusch- und Wärmeentwicklung sowie Bauraumverkleinerung, und andererseits ein thermischer Längenausgleich ausführbar, da das Sonnenrad axial nicht durch die Planetenräder begrenzt gehalten ist, sondern nur radial eine Begrenzung vorsehbar ist.

Bei einer vorteilhaften Ausgestaltung weist jedes Befestigungsmittel zwischen dem ersten und dem zweiten Zustand einen weiteren Zustand auf, in welchem der Formschluss schon aufgehoben, der Kraftschluss aber noch nicht hergestellt ist. Von Vorteil ist dabei, dass Die Befestigungsmittel mehrere Zustände oder sogar eine kontinuierliche Menge von Zuständen aufweisen können. Somit sind sie mit einfachen Mitteln realisierbar, wie beispielsweise mit Bohrungen und zugehörigen Gewindestiften.

Bei einer vorteilhaften Ausgestaltung sind die Befestigungsmittel zumindest als in Bohrungen vorgesehene Gewindestifte vorgesehen, die im zweiten Zustand radial weiter hineingeschraubt sind als im ersten Zustand. Von Vorteil ist dabei, dass der Zustand durch die Einschraubtiefe charakterisierbar ist und die Mittel einfach und kostengünstig realisierbar sind.

Bei einer vorteilhaften Ausgestaltung bewirken die Gewindestifte im zweiten Zustand den Kraftschluss mittels Deformation einer Hülse, die dadurch um die Welle der antreibenden Vorrichtung gespannt wird. Von Vorteil ist dabei, dass die Gewindestifte hart ausführbar sind, obwohl die Rotorwelle weich ausgeführt ist. Die Hülse schützt somit die Rotorwelle vor Beschädigung und wirkt sozusagen als Hiifs-Befestigungsmittet.

Bei einer vorteilhaften Ausgestaltung sind die Befestigungsmittel als in einer Ausnehmung der antreibenden Welle vorgesehnen Spannring vorgesehen, der im zweiten Zustand einen kleineren maximalen Außendurchmesser aufweist sind als im ersten Zustand. Von Vorteil ist dabei, dass ein weiteres einfach und kostengünstig realisierbares Mittel verwendbar ist.

Bei einer vorteilhaften Ausgestaltung ist die Ausnehmung derart beschaffen, dass ein ungespannter Spannring als Befestigungsmittel im ersten Zustand den Formschluss von der antreibenden Welle zu einem diese umgebenden Gehäuseteil herstellt, wobei der gespannte Spannring als Befestigungsmittel im zweiten Zustand den Kraftschluss von der antreibenden Welle zu der Welle der antreibenden Vorrichtung herstellt. Von Vorteil ist dabei, dass ein kostengünstiges Standard-Bauteil verwendbar ist.

Bei einer vorteilhaften Ausgestaltung ist die antreibende Vorrichtung ein Elektromotor und die Welle der antreibenden Vorrichtung die Rotorwelle desselben. Von Vorteil ist dabei, dass das abtriebsseitige Lager der Rotorwelle zum Lagern, insbesondere als Festlager, der antreibenden Welle des Getriebes, die insbesondere mit dem Sonnenrad verbunden ist, verwendbar ist.

Bei einer vorteilhaften Ausgestaltung ist der eintriebsseitige Wellendichtring zwischen Sonne und Befestigungsmitteln vorgesehen. Von Vorteil ist dabei, dass kein Schmiermittel in den Motor eindringen kann.

Bei einer vorteilhaften Ausgestaltung dichtet der eintriebsseitige Wellendichtring zwischen Gehäuseteil und antreibender Welle ab, wobei die Lauffläche des Wellendichtrings auf der antreibenden Welle auf einem kleineren Durchmesser vorgesehen ist als die antreibende Welle weiter eintriebsseitig aufweist. Von Vorteil ist dabei, dass ein eintriebsseitiger Wellendichtring anbringbar ist, der bis zu hohen Drehzahlen arbeitet, da die Umfangsgeschwindigkeit geringer ist als bei hohem Durchmesser.

Bei einer vorteilhaften Ausgestaltung weist das Gehäuseteil eintriebsseitig einen Zentrierbund auf. Von Vorteil ist dabei, dass der Motor passgenau verbindbar ist und somit die antreibende Welle relativ zum abtriebsseitigen Lager des Motors, als Festlager, positionierbar ist.

Bei einer vorteilhaften Ausgestaltung ist die antreibende Vorrichtung mittels Befestigungsschrauben verbindbar. Von Vorteil ist dabei, dass eine feste mit dem Zentrierbund zentrierbare Verbindung herstellbar ist.

Wichtige Merkmale der Erfindung bei dem Verfahren zur Montage einer ersten Vorrichtung an einer zweiten Vorrichtung sind, dass beide Vorrichtungen jeweils ein Gehäuse und jeweils eine Welle umfassen,
dass die erste Vorrichtung ein erstes und ein zweites Befestigungsmittel umfasst,
dass die Welle der ersten Vorrichtung Mittel zur Aufnahme der Welle der zweiten Vorrichtung
umfasst,
und dass
- in einem ersten Schritt das erste und das zweite Befestigungsmittel jeweils unabhängig, also für sich die Welle der ersten Vorrichtung im Gehäuse der ersten Vorrichtung gegen Verdrehen und Verschieben sichern, also arretieren,
- in einem zweiten Schritt die Welle der zweiten Vorrichtung in die Mittel zur Aufnahme der ersten Wellen eingeführt wird,
- in einem dritten Schritt das Gehäuse der ersten Vorrichtung mit dem Gehäuse der zweiten Vorrichtung fest verbunden wird,
- in einem vierten Schritt das erste Befestigungsmittel derart betätigt wird, dass dessen Verbindung mit dem Gehäuse aufgehoben und eine verdreh- und verschiebesicher Verbindung der Welle der ersten Vorrichtung mit der Welle der zweiten Vorrichtung hergestellt wird, während das zweite Befestigungsmittel weiterhin die Welle der ersten Vorrichtung im Gehäuse der ersten Vorrichtung arretiert,
- in einem fünften Schritt das zweite 8efestigungsmittel derart betätigt wird, dass dessen Verbindung mit dem Gehäuse aufgehoben wird.

Von Vorteil ist dabei, dass die Welle der ersten Vorrichtung in jedem Schritt des Verfahrens gegen Verdrehen und axiales Verschieben gesichert ist, entweder durch Fixierung im Gehäuse oder durch Fixierung auf der Welle der zweiten Vorrichtung, die ihrerseits über Lager und das Gehäuse mit dem Gehäuse der ersten Vorrichtung fest verbunden und fixiert ist. Dadurch ist vorteilhaft ein Lager der Welle oder ein Haltering oder allgemein ein zusätzliches Stützelement der ersten Vorrichtung einsparbar, das im Betrieb, also zum Drehen der Wellen, entbehrlich ist und nur der Fixierung der Welle der ersten Vorrichtung bei Transport oder allgemein im unmontierten Zustand dient.

Bei einer weiteren vorteilhaften Ausgestaltung wird im fünften Schritt das zweite Befestigungsmittel derart betätigt, dass eine verdreh- und verschiebesichere Verbindung der Welle der ersten Vorrichtung mit der Welle der zweiten Vorrichtung hergestellt wird. Von Vorteil ist dabei, dass eine zusätzliche, kraftschlüssige Verbindung der Welle miteinander bewirkt wird. Dies stellt ein Redundanz dar, die eine erhöhte Sicherheit nach sich zieht.

Bei einer weiteren vorteilhaften Ausgestaltung ist die zweite Vorrichtung ein Elektromotor. Bei einer weiteren vorteilhaften Ausgestaltung ist die erste und/oder zweite Vorrichtung ein Getriebe oder eine Kupplung. Da.die Abtriebswelle eines Elektromotors über eine eigene robuste Lagerung verfügt, ist eine Lagerung der Welle der ersten Vorrichtung verzichtbar. Bei einer Weiterbildung ist die erste Vorrichtung ein Planetengetriebe, und die Welle der ersten Vorrichtung ist direkt verbunden mit dem Sonnenrad des Planetengetriebes. Dadurch ist vorteilhaft die Kombination Sonnenrad mit Welle auf die Abtriebswelle des Elektromotor montierbar, wodurch Lagerungs- und Führungslemente für die Kombination Sonnerad mit Welle in der ersten Vorrichtung verzichtbar sind. Die führt zu Gewichtreduktion, Verminderung von Lagerausfällen, Verminderung der Geräuschentwicklung und Verlängerung der Standzeit.

In einer Weiterbildung ist jedes Befestigungmittel als ein Gewindestift ausgebildet, der in einen konzentrisch um die Mittel zur Aufnahme der Welle der zweiten Vorrichtung angeordneten Ring radial eingeschraubt wird.

Weitere Vorteile ergeben sich aus den Unteransprüchen.

In der vorliegenden Schrift wird die eintreibenden Seite auch als antreibend bezeichnet. Hintergrund dafür ist, dass ein Motor in motorischer Betriebsart an dieser Seite des Getriebes anschließbar ist und Drehmoment vom Motor ans Getriebe übertragen wird. An der eintreibenden Seite des Getriebes fließt der Drehmomentfluss sozusagen ins Getriebe. Selbstverständlich kann bei generatorischer Betriebsart des Motors der Drehmomentfluss sich umkehren. Dann fließt Drehmoment an der antreibenden Seite heraus.

### Bezugszeichenliste

- 1: Verbindungsschrauben
- 2: Gewindebohrung
- 3: Planetenrad
- 4: Nadellager
- 5: Planetenbolzen
- 6: Planetenträger
- 7: Lager
- 8: Gehäuseteil
- 9: Gehäuseteil
- 10: Gehäuseteil
- 11: Gehäuseteil
- 12: Sonnenrad
- 13: Adapterwelle
- 14a, 14b: Gewindestift
- 15: Zentrierbund
- 16: Wellendichtring
- 17: Ausnehmung
- 18: Verbindungsschrauben
- 19: Verschlusskappe
- 20: Hülse mit Axialschlitzen
- 21: Gewindebohrung
- 22: Bohrung

Die Erfindung wird nun anhand von Abbildungen näher erläutert:

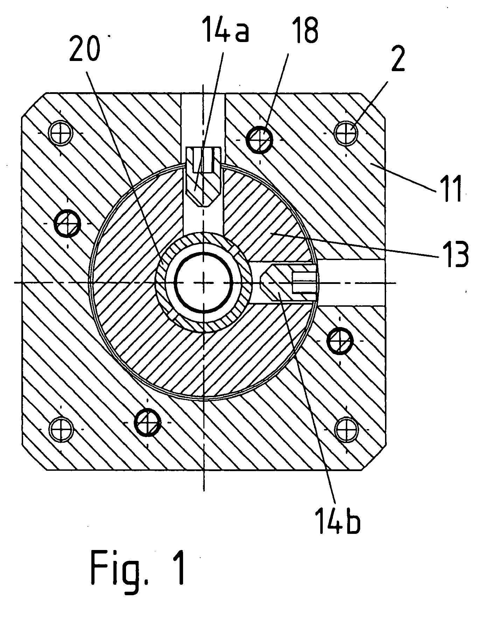

In der Figur 1 ist ein Schnitt und in Figur 2 ein symbolischer schematisierter Schnitt durch die erfindungsgemäße Vorrichtung gezeigt, der die erfinderische Idee zeigt. Dargestellt ist eine erste Vorrichtung, also ein Adapter, in Ausbildung eines Planetengetriebes. Die zweite Vorrichtung, an die die erste Vorrichtung - also das Planetengetriebe - montiert wird, ist nicht gezeigt. Diese zweite Vorrichtung kann beispielsweise ein Elektromotor sein. Einzelheiten des Planetengetriebes sind teilweise nicht ausgeführt.

Der Planetenträger 6 ist abtriebsseitig einseitig gelagert über die Lager 7 und mittels eines Wellendichtringes 16 abgedichtet. Der Planetenträger nimmt die Planetenbolzen 5 auf an denen die Planetenräder 3 über Nadellager 4 gelagert sind. Die Planetenräder 3 stehen im Eingriff mit dem im Gehäuseteil 9 vorgesehenen Hohlrad und mit dem Sonnenrad 12, das gelagert ist in den Planetenrädern 3. Diese Lagerung kann also ein Loslager darstellen.

Bei der Erfindung wird diese Lagerung des Sonnenrades verwendet und es wird auf das entsprechende Wälzlager der DE 101 60 685 verzichtet.

Bei dem Ausführungsbeispiel nach den Figuren 1 beziehungsweise 2 ist das Sonnenrad mit der Adapterwelle 13 verbunden, die zur Aufnahme der Motorwelle eine Ausnehmung 17 aufweist. Die Verbindung des Sonnenrades ist als Presspassverbindung ausgeführt. Bei weiteren Ausführungsbeispielen ist die Verbindung auch durch andere kraft- und oder formschlüssige Verbindungstechniken ausführbar.

Die Adapterwelle 13 ist mittels Wellendichtringes 15 gegenüber dem Gehäuseteil 10 abgedichtet.

Das Gehäuseteil 8 für die abtriebsseitigen Lager 7, das Gehäuseteil 9 mit dem Hohlrad und das Gehäuseteil 10 sind mittels der Verbindungsschrauben 1 verbunden.

Das Gehäuseteil 11 ist mit dem Gehäuseteil 10 mittels der Verbindungsschrauben 18 verbunden.

Mittels in Gewindebohrungen 2 eingeschraubte Befestigungsschrauben ist ein Motorgehäuse verbindbar mit dem Gehäuseteil 11. Dieses weist auch einen Zentrierbund 15 auf, der ein zentriergenaues Verbinden des Motorgehäuses mit dem Gehäuseteil 11 ausführbar macht. Auf diese Weise ist die Motorwelle, weiche im Motorgehäuse über ein Wälzlager als Festlager gelagert ist, direkt mit der Adapterwelle verbindbar und stellt somit auch für die Adapterwelle eine Lagerung bereit.

Zur Verbindung mit der Motorwelle sind Gewindestifte 14a, 14b als Befestigungsmittel vorgesehen, die anfangs, also in einem ersten Zustand in unbetätigter Position vor dem Verbinden mit der Motorseite, aus der Gewindebohrung 21 radial soweit herausstehen, dass die Adapterwelle formschlüssig gehalten ist im Gehäuseteil 11, das hierzu ebenfalls eine Bohrung 22 oder wahlweise eine Gewindebohrung aufweist, Auf diese Weise ist also die Adapterwelle formschlüssig arretiert.

Beim Verbinden mit der Motorwelle wird diese in die Ausnehmung der Adapterwelle eingeführt. Die Spannhülse 20 umgibt dann die Motorwelle direkt. Diese Spannhülse 20 weist Schlitze, insbesondere Axialschlitze, auf. Es wird nun ein Befestigungsmittel in Form eines ersten Gewindestifts 14a, 14b radial weiter hineingeschraubt aus einem ersten Zustand in unbetätigter Position in einen zweiten Zustand in betätigter Position zur Herstellung einer kraftschlüssigen Verbindung zwischen Motorwelle und Adapterwelle. Dieses Hereinschrauben ist ein Betätigen des ersten Befestigungsniittels. Der durch den jeweiligen Gewindestift bewirkte Formschluss zum Gehäuseteil 11 hin geht dabei verloren.

Am Umfang sind mindestens zwei Gewindestifte 14a, 14b vorgesehen. Die Gewindestifte 1asa, 14b sind axial in gleicher Position gegeneinander am Umfang der Adapterwelle 13 versetzt angeordnet. Jedem Gewindestift ist eine separate Ausnehmung im Gehäuseteil 11 zugeordnet, die eine formschlüssige Arretierung der Adapterwelle 13 gegen Verdrehen und gegen axiales Verschieben bewirkt. Arretierung bedeutet, dass ein Verdrehen und axiales Verschieben bis auf ein sehr kleines Spiel verhindert ist. Dadurch, dass jedem Gewindestift 14a, 14b eine separate Ausnehmung im Gehäuseteil 11 zugeordnet ist, ist durch jeden Gewindestift 14a, 14b für sich die Arretierung bewirkbar. Die Versetzung der Gewindestifte 14a, 14b entlang des Umfangs der Adapterwelle 13 um 90° - oder in Weiterbildungen um einen anderen, von Null verschiedenen Betrag, beispielsweise um 15°, 30°, 45°, 60°, 120° oder 180° - bewirkt eine sichere Arretierung der Adapterwelle 13, wenn alle Gewindestifte im ersten Zustand, also in unbetätigter Position, angeordnet sind.

Nachdem der erste Gewindestift 14a bis zum Drücken auf die Hülse 20, beispielsweise als Spannhülse ausgeführt, eingeschraubt wurde, werden nun auch die anderen Gewindestifte 14beingeschraubt. Somit geht der Formschluss mit dem Gehäuseteil 11 gänzlich verloren und der von den Gewindestiften 14a, 14b bewirkte Kraftschluss zwischen Hülse 20 und Motorwelle wird aufgebaut. Beim Einschrauben gibt es einen Übergangsbereich, wo der durch einen jeweiligen Gewindestift 14a, 14b bewirkten Formschluss schon aufgehoben und der Kraftschluss noch nicht aufgebaut ist. In der Figur 1 ist der eingeschraubte Gewindestift 14b in einer Position im Übergangsbereich, also in einem Zwischenzustand, abgebildet. Vorteil der Verwendung von mehr als einem Gewindestift 14a, 14b ist dabei, dass keine unzulässig großen Verschiebungen der Adapterwelle 13 relativ zur Motorwelle statt finden. Mit anderen Worten ist die Adapterwelle in jedem Schritt der Montage an der Motorwelle fixiert: Zunächst, also wenn die Motorwelle in die Adapterwelle eingeführt und der Motor mittels Befestigungsschrauben 2 am Gehäuse 11 fixiert wird, durch alle Gewindestiffte 14a, 1Ab im Gehäuseteil 11, nach Einschrauben des ersten Gewindestifts 14a, 14b in den Übergangsbereich durch die verbeleibenden Gewindestifte 14a, 14b im Gehäuseteil 11, nach Einschrauben des ersten Gewindestifts 14a, 14b in die kraftschlüssige und also radial minimale Position durch diesen auf der Hülse mit Axialschlitzen 20 und durch die übrigen Gewindestifte 14a, 14b im Gehäuseteil 11 und nach Einschrauben aller Gewindestifte 14a, 14b in die kraftschlüssige Position durch diese auf der Hülse mit Axialschlitzen 20 und damit auf der Motorwelle. Nach Einschrauben aller Gewindestifte 14a, 14b in die kraftschlüssige Position ist die Adapterwelle 13 mit der Motorwelle frei drehbar beweglich und damit voll funktionstüchtig, während die Gewindestifte 14a, 14b in ihrer jeweiligen Ausgangsposition, also der radial maximalen Position, eine Drehbewegung verhindern.

Somit wird dann die Adapterwelle fest verbunden mit der Motorwelle und frei drehbar im Gehäuseteil 11. Ein Wälzlager im Gehäuseteil 10 oder 11 für die Adapterwelle 13 entfällt also vollständig. Somit wird weniger Wärme und Geräusch erzeugbar und es gibt ein drehzahlbegrenzendes Mittel weniger. Außerdem kann-dieses nicht vorhandene Lager auch nicht ausfallen. Darüber hinaus ist selbstverständlich auch keine Lagersitz herzustellen und somit die Herstellung kostengünstiger und einfacher.

Der Wellendichtring sitzt auf einem Absatz verringerten Durchmessers und kann daher bis zu hohen Drehzahlen betrieben werden. Denn die Umfangsgeschwindigkeit ist verringert.

Die Adapterwelle 13 ist statisch bestimmt gelagert.

Der thermische Längenausgleich der Motorwelle ist vorgesehen, da die Adapterwelle nur in axialer Richtung nur durch die Motorwelle festgelegt ist und das Sonnenrad sich in axialer Richtung etwas bewegen kann.

Die Verschlusskappe 19 verhindert ein Austreten von eventuell durch die Presspassverbindung zwischen Sonnenrad 12 und Adapterwelle 13 hindurchtretendes Schmieröl.

Bei einem weiteren erfindungsgemäßen Ausführungsbeispiel ist nur ein Gewindestift vorgesehen zur einfacheren und kostengünstigeren Bauweise. In diesem Fall ist der Gewindestift mit seiner Länge derart zu bemessen, dass der Übergangsbereich im wesentlichen entfällt, dass also der Gewindestift beim Einschrauben unmittelbar nach Verlassen des Gehäuseteils 11 einen Kraftschluss zwischen zwischen Hülse 20 und Motorwelle aufbaut.

Bei einem weiteren erfindungsgemäßen Ausführungsbeispiel sind drei oder mehr als drei Gewindestifte vorgesehen.

Bei einem weiteren erfindungsgemäßen Ausführungsbeispiel ist statt der Gewindestifte 14a, 14b und der Hülse 20 ein Spannring verwendet, welcher vor dem Spannen in einer am Umfang verlaufenden Vertiefung des Gehäuses 11 formschlüssig gehalten ist und nach Einführen der Motorwelle in die Ausnehmung des Spannrings gespannt wird zur Herstellung der kraftschlüssigen Verbindung zwischen Motorwelle und Adapterwelle. Dabei wird der Durchmesser des Spannrings verringert und der Formschluss zum Gehäuseteil 11 geht verloren. Der Kraftschluss zwischen den Wellen wird aber hergestellt.

Bei einem weiteren erfindungsgemäßen Ausführungsbeispiel ist das Gehäuseteil 11 mit dem Gehäuseteil 10 einstückig ausgeführt.

Bei einem weiteren erfindungsgemäßen Ausführungsbeispiel ist das Gehäuseteil 11 mehrstückig ausgeführt.

## Patentansprüche

1. Adapter,
umfassend ein Gehäuseteil (11) und eine antreibende Welle (13) zur Aufnahme einer weiteren Welle,
**dadurch gekennzeichnet, dass**
mindestens zwei Befestigungsmittel (14a, 14b) vorgesehen sind,
wobei jedes Befestigungsmittel (14a, 14b) in einem ersten Zustand zur formschlüssigen, verdrehsichernden und verschiebungssichernden, insbesondere axial, Arretierung der antreibenden Welle (13) im Gehäuseteil (11) vorgesehen ist,
wobei jedes Befestigungsmittel (14a, 14b) in einem zweiten Zustand zur kraftschlüssigen Verbindung zwischen der antreibenden Welle (13) mit der weiteren Welle vorgesehen ist,
insbesondere wobei die Befestigungsmittel (14a, 14b) unabhängig voneinander betätigbar und also vom ersten Zustand über Zwischenzustände in den zweiten Zustand überführbar sind.

2. Adapter nach Anspruch 1,
**dadurch gekennzeichnet, dass**
der Adapter als Planetengetriebe ausgebildet ist,
umfassend zumindest ein Umlaufräder und/oder Planetenräder (3) antreibendes Sonnenrad (12), eine das Sonnenrad antreibende Welle und
ein Gehäuseteil zur Verbindung mit einer das Getriebe antreibenden Vorrichtung, wie Elektromotor, Verbrennungsmotor oder ein mit einem solchen Motor verbundener Adapter oder Kupplung.

3. Adapter nach mindestens einem der vorangegangenen Ansprüche,
**dadurch gekennzeichnet, dass**
mindestens zwei der Befestigungsmittel (14a, 14b) einen unterschiedlichen Umfangswinkel aufweisen, also gegeneinander am Umfang der antreibenden Welle versetzt angeordnet sind.

4. Adapter nach mindestens einem der vorangegangenen Ansprüche,
**dadurch gekennzeichnet, dass**
mindestens zwei der Befestigungsmittel (14a, 14b) auf axial gleicher Position vorgesehen sind.

5. Adapter nach mindestens einem der vorangegangenen Ansprüche,
**dadurch gekennzeichnet, dass**
jedem Befestigungsmittel (14a, 14b) eine separate Ausnehmung im Gehäuseteil zugeordnet ist.

6. Planetengetriebe,
umfassend eine mit einem Sonnenrad (12) verbundene antreibende Welle (13),
wobei die antreibende Welle (13) Mittel zur Aufnahme einer weiteren Welle und Befestigungsmittel (14a, 14b) zur Fixierung der Welle (13) mit der weiteren Welle aufweist,
**dadurch gekennzeichnet, dass**
das Planetengetriebe eintriebsseitig vorkomplettiert ausgebildet ist,
wobei die Befestigungsmittel (14a, 14b) jeweils zur Fixierung der antreibender Welle (13) mit der weiteren Welle in unbetätigter Position die antreibende Welle im Gehäuse (11) arretieren
und in betätigter Position jeweils die antreibende Welle (13) mit der weiteren Welle verdreh- und verschiebesicher verbinden.

7. Planetengetriebe nach Anspruch 6,
**dadurch gekennzeichnet, dass**
die antreibende Welle (13) nicht im Gehäuseteil des Planetengetriebes gelagert ist.

8. Planetengetriebe nach einem der Ansprüche 6 bis 7,
**dadurch gekennzeichnet, dass**
die antreibende Welle (13) über das Sonnenrad (12) und die Planetenräder (3) lose gelagert ist und über zumindest ein Lager der antreibenden Vorrichtung fest gelagert ist.

9. Planetengetriebe nach einem der Ansprüche 6 bis 8,
**dadurch gekennzeichnet, dass**
jedes Befestigungsmittel (14a, 14b) zwischen dem ersten und dem zweiten Zustand einen weiteren Zustand aufweist, in welchem der Formschluss schon aufgehoben, der Kraftschluss aber noch nicht hergestellt ist.

10. Planetengetriebe nach einem der Ansprüche 6 bis 9,
**dadurch gekennzeichnet, dass**
die Befestigungsmittel (14a, 14b) zumindest als in Bohrungen vorgesehene Gewindestifte vorgesehen sind, die im zweiten Zustand radial weiter hineingeschraubt sind als im ersten Zustand.

11. Planetengetriebe nach Anspruch 10,
**dadurch gekennzeichnet, dass**
die Gewindestifte im zweiten Zustand den Kraftschluss mittels Deformation einer Hülse (20) bewirken, die dadurch um die Welle der antreibenden Vorrichtung gespannt wird.

12. Planetengetriebe nach einem der Ansprüche 6 bis 11,
**dadurch gekennzeichnet, dass**
die Befestigungsmittel (14a, 14b) als in einer Ausnehmung der antreibenden Welle (13) vorgesehnen Spannring vorgesehen sind, der im zweiten Zustand einen kleineren maximalen Außendurchmesser aufweist als im ersten Zustand.

13. Planetengetriebe nach Anspruch 12.
**dadurch gekennzeichnet, dass**
die Ausnehmung derart beschaffen ist, dass ein ungespannter Spannring als Befestigungsmittel im ersten Zustand den Formschluss von der antreibenden Welle (13) zu einem diese umgebenden Gehäuseteil (11) herstellt,
wobei der gespannte Spannring als Befestigungsmittel im zweiten Zustand den Kraftschluss von der antreibenden Welle (13) zu der Welle der antreibenden Vorrichtung herstellt.

14. Planetengetriebe nach einem der Ansprüche 6 bis 13,
**dadurch gekennzeichnet, dass**
die antreibende Vorrichtung ein Elektromotor ist und die Welle der antreibenden Vorrichtung die Rotorwelle desselben.

15. Planetengetriebe nach einem der Ansprüche 6 bis 14,
**dadurch gekennzeichnet, dass**
eine eintriebsseitige Wellendichtring (15) zwischen Sonne und Befestigungsmitteln vorgehen ist.

16. Planetengetriebe nach Anspruch 15,
**dadurch gekennzeichnet, dass**
der eintriebsseitige Wellendichtring zwischen Gehäuseteil und antreibender Welle (13) abdichtet,
wobei die Lauffläche des Wellendichtrings auf der antreibenden Welle auf einem kleineren Durchmesser vorgesehen ist als die antreibende Welle weiter eintriebsseitig aufweist.

17. Planetengetriebe nach mindestens einem der Ansprüche 6-16,
**dadurch gekennzeichnet, dass**
das Gehäuseteil eintriebsseitig einen Zentrierbund aufweist

18. Planetengetriebe nach mindestens einem der Ansprüche 6-17,
**dadurch gekennzeichnet, dass**
die antreibende Vorrichtung mittels Befestigungsschrauben verbindbar ist.

19. Antrieb, umfassend Planetengetriebe und einen dieses antreibenden Elektromotor,
**dadurch gekennzeichnet, dass**
das Planetengetriebe nach einem der Ansprüche 6 bis 18 ausgebildet ist.

20. Verfahren zur Montage einer ersten Vorrichtung an einer zweiten Vorrichtung,
wobei beide Vorrichtungen jeweils ein Gehäuse und jeweils eine Welle umfassen,
wobei die erste Vorrichtung ein erstes und ein zweites Befestigungsmittel (14a, 14b) umfasst,
wobei die Welle der ersten Vorrichtung Mittel zur Aufnahme der Welle der zweiten Vorrichtung umfasst,
**dadurch gekennzeichnet, dass**
in einem ersten Schritt das erste und das zweite Befestigungsmittel (14a, 14b) die Welle (13) der ersten Vorrichtung im Gehäuse (11) der ersten Vorrichtung gegen Verdrehen und Verschieben sichern,
in einem zweiten Schritt die Welle der zweiten Vorrichtung in die Mittel zur Aufnahme der ersten Wellen eingeführt wird,
in einem dritten Schritt das Gehäuse (11) der ersten Vorrichtung mit dem Gehäuse der zweiten Vorrichtung fest verbunden wird,
in einem vierten Schritt das erste Befestigungsmittel (14a, 14b) derart betätigt wird, dass dessen Verbindung mit dem Gehäuse aufgehoben und eine verdreh- und verschiebesichere Verbindung der Welle der ersten Vorrichtung mit der Welle der zweiten Vorrichtung hergestellt wird,
in einem fünften Schritt das zweite Befestigungsmittel (14a, 14b) derart betätigt wird, dass dessen Verbindung mit dem Gehäuse aufgehoben wird.

21. Verfahren nach Anspruch 20,
**dadurch gekennzeichnet, dass**
im fünften Schritt das zweite Befestigungsmittel derart betätigt wird, dass eine verdreh- und verschiebesicher Verbindung der Welle der ersten Vorrichtung mit der Welle der zweiten Vorrichtung hergestellt wird.

22. Verfahren nach einem der Ansprüche 20 bis 21,
**dadurch gekennzeichnet, dass**
die zweite Vorrichtung ein Elektromotor ist.

23. Verfahren nach einem der Ansprüche 20 bis 21,
**dadurch gekennzeichnet, dass**
die erste und/oder zweite Vorrichtung ein Getriebe oder eine Kupplung ist.

## Claims

1. An adapter,
comprising a housing part (11) and a driving shaft (13) for receiving a further shaft,
**characterised in that**
at least two fastening means (14a, 14b) are provided,
each fastening means (14a, 14b) in a first state being provided for the positive, twist-preventing and displacement-preventing, in particular axial, locking of the driving shaft (13) in the housing part (11),
each fastening means (14a, 14b) in a second state being provided for the non-positive connection between the driving shaft (13) and the further shaft,
in particular, the fastening means (14a, 14b) being able to be actuated independently of each other and so being able to be converted from the first state via intermediate states into the second state.

2. An adapter according to Claim 1,
**characterised in that**
the adapter is in the form of a planetary gear train,
comprising at least one sun gear (12) which drives revolving gears and/or planet gears (3), a shaft which drives the sun gear, and
a housing part for connection to a device which drives the gear train, such as an electric motor, internal combustion engine, or an adapter or coupling connected to such a motor or engine.

3. An adapter according to at least one of the preceding claims,
**characterised in that**
at least two of the fastening means (14a, 14b) have a different angle at the circumference, i.e. are arranged offset relative to one another on the periphery of the driving shaft.

4. An adapter according to at least one of the preceding claims,
**characterised in that**
at least two of the fastening means (14a, 14b) are provided at an axially identical position.

5. An adapter according to at least one of the preceding claims,
**characterised in that**
each fastening means (14a, 14b) is associated with a separate cutout in the housing part.

6. A planetary gear train,
comprising a driving shaft (13) connected to a sun gear (12),
the driving shaft (13) having means for receiving a further shaft and fastening means (14a, 14b) for fixing the shaft (13) to the further shaft,
**characterised in that**
the planetary gear train is designed to be pre-completed on the input side,
the fastening means (14a, 14b) in each case for fastening the driving shaft (13) to the further shaft in the unactuated position lock the driving shaft in the housing (11)
and in the actuated position in each case connect the driving shaft (13) to the further shaft in a twist-preventing and displacement-preventing manner.

7. A planetary gear train according to Claim 6,
**characterised in that**
the driving shaft (13) is not mounted in the housing part of the planetary gear train.

8. A planetary gear train according to one of Claims 6 to 7,
**characterised in that**
the driving shaft (13) is loosely mounted via the sun gear (12) and the planet gears (3) and is mounted securely via at least one bearing of the driving device.

9. A planetary gear train according to one of Claims 6 to 8,
**characterised in that**
each fastening means (14a, 14b) has between the first and the second state a further state in which the positive lock has already been cancelled, but the non-positive lock has not yet been brought about.

10. A planetary gear train according to one of Claims 6 to 9,
**characterised in that**
the fastening means (14a, 14b) are provided at least as headless screws provided in bores, which screws in the second state are screwed in farther radially than in the first state.

11. A planetary gear train according to Claim 10,
**characterised in that**
the headless screws in the second state bring about the non-positive lock by means of deformation of a sleeve (20), which is thereby clamped around the shaft of the driving device.

12. A planetary gear train according to one of Claims 6 to 11,
**characterised in that**
the fastening means (14a, 14b) are provided as [a] clamping ring provided in a cutout in the driving shaft (13), which ring in the second state has a smaller maximum external diameter than in the first state.

13. A planetary gear train according to Claim 12,
**characterised in that**
the cutout is of such a nature that an unclamped clamping ring as fastening means in the first state brings about the positive lock of the driving shaft (13) with a housing part (11) which surrounds it,
the clamped clamping ring as fastening means in the second state bringing about the non-positive lock of the driving shaft (13) to the shaft of the driving device.

14. A planetary gear train according to one of Claims 6 to 13,
**characterised in that**
the driving device is an electric motor and the shaft of the driving device is the rotor shaft thereof.

15. A planetary gear train according to one of Claims 6 to 14,
**characterised in that**
an input-side shaft sealing ring (15) is provided between the sun and the fastening means.

16. A planetary gear train according to Claim 15,
**characterised in that**
the input-side shaft sealing ring seals off [sic] between the housing part and driving shaft (13), the running surface of the shaft sealing ring on the driving shaft being provided at a smaller diameter than the driving shaft further on the input side.

17. A planetary gear train according to at least one of Claims 6-16,
**characterised in that**
the housing part has a centring collar on the input side.

18. A planetary gear train according to at least one of Claims 6-17,
**characterised in that**
the driving device can be connected by means of fastening screws.

19. A drive, comprising a planetary gear train and an electric motor which drives the latter,
**characterised in that**
the planetary gear train is designed in accordance with one of Claims 6 to 18.

20. A method for mounting a first device on a second device, both devices comprising in each case a housing and in each case a shaft, the first device comprising a first and a second fastening means (14a, 14b), the shaft of the first device comprising means for receiving the shaft of the second shaft,
**characterised in that**
in a first step, the first and the second fastening means (14a, 14b) secure the shaft (13) of the first device in the housing (11) of the first device against twisting and displacement,
in a second step, the shaft of the second device is introduced into the means for receiving the first shafts,
in a third step, the housing (11) of the first device is connected securely to the housing of the second device,
in a fourth step, the first fastening means (14a, 14b) is actuated such that the connection thereof with the housing is cancelled and a twist-preventing and displacement-preventing connection of the shaft of the first device to the shaft of the second device is brought about,
in a fifth step, the second fastening means (14a, 14b) is actuated such that the connection thereof with the housing is cancelled.

21. A method according to Claim 20,
**characterised in that**
in the fifth step, the second fastening means is actuated such that a twist-preventing and displacement-preventing connection of the shaft of the first device to the shaft of the second device is brought about.

22. A method according to one of Claims 20 to 21,
**characterised in that**
the second device is an electric motor.

23. A method according to one of Claims 20 to 21,
**characterised in that**
the first and/or second device is a gear train or a coupling.

## Revendications

1. Adaptateur, comprenant une partie de boîtier (11) et un arbre d'entraînement (13) destiné à recevoir un autre arbre,
**caractérisé en ce qu'**il est prévu au moins deux moyens de fixation (14a, 14b),
sachant que chaque moyen de fixation (14a, 14b) est prévu, dans un premier état, pour bloquer en rotation et en translation, notamment axiale, par liaison positive, l'arbre d'entraînement (13) dans la partie de boîtier (11),
sachant que chaque moyen de fixation (14a, 14b) est prévu, dans un deuxième état, pour une liaison à force entre l'arbre d'entraînement (13) et l'autre arbre.
sachant notamment que les moyens de fixation (14a, 14b) peuvent être actionnés indépendamment l'un de l'autre et peuvent donc être transférés du premier état dans le deuxième état en passant par des états intermédiaires.

2. Adaptateur selon la revendication 1, **caractérisé en ce que** l'adaptateur est réalisé sous forme d'engrenage planétaire comprenant
au moins une roue solaire (12) entraînant des roues planétaires et/ou des pignons satellites (3),
un arbre entraînant la roue solaire,
et une partie de boîtier pour la liaison avec un dispositif entraînant l'engrenage, tel qu'un moteur électrique, un moteur thermique ou un adaptateur ou embrayage relié à un tel moteur.

3. Adaptateur selon au moins une des revendications précédentes, **caractérisé en ce qu'**au moins deux des moyens de fixation (14a, 14b) présentent un angle inscrit différent, donc sont disposés en étant mutuellement décalés sur la circonférence de l'arbre d'entraînement.

4. Adaptateur selon au moins une des revendications précédentes, **caractérisé en ce qu'**au moins deux des moyens de fixation (14a, 14b) sont prévus à la même position axiale.

5. Adaptateur selon au moins une des revendications précédentes, **caractérisé en ce qu'**un évidement séparé est associé à chaque moyen de fixation (14a, 14b) dans la partie de boîtier.

6. Engrenage planétaire, comprenant un arbre d'entraînement (13) relié à une roue solaire (12), sachant que l'arbre d'entraînement (13) présente des moyens pour recevoir un autre arbre et des moyens de fixation (14a, 14b) pour fixer l'arbre (13) à l'autre arbre, **caractérisé en ce que** l'engrenage planétaire est conçu pré-monté du côté d'entrée, sachant que les moyens de fixation (14a, 14b) respectivement prévus pour fixer l'arbre d'entraînement (13) à l'autre arbre bloquent l'arbre d'entraînement dans le boîtier (11) dans leur position non actionnée et, dans leur position actionnée, relient respectivement l'arbre d'entraînement (13) à l'autre arbre d'une manière solidaire en rotation et en translation.

7. Engrenage planétaire selon la revendication 6, **caractérisé en ce que** l'arbre d'entraînement (13) n'est pas monté dans la partie de boîtier de l'engrenage planétaire.

8. Engrenage planétaire selon la revendication 6 ou 7, **caractérisé en ce que** l'arbre d'entraînement (13) est monté librement au moyen de la roue solaire (12) et des pignons satellites (3), et est monté fixement au moyen d'au moins un palier du dispositif d'entraînement.

9. Engrenage planétaire selon l'une des revendications 6 à 8, **caractérisé en ce que** chaque moyen de fixation (14a, 14b) présente, entre le premier et le deuxième état, un état supplémentaire dans lequel la liaison positive est déjà supprimée, mais la liaison à force n'est pas encore réalisée.

10. Engrenage planétaire selon l'une des revendications 6 à 9, **caractérisé en ce que** les moyens de fixation (14a, 14b) sont prévus au moins sous la forme de vis sans tête prévues dans des perçages, qui sont vissées radialement plus profondément dans le deuxième état que dans le premier état.

11. Engrenage planétaire selon la revendication 10, **caractérisé en ce que** les vis sans tête, dans le deuxième état, produisent la liaison à force par déformation d'un manchon (20) qui est ainsi serré autour de l'arbre du dispositif d'entraînement.

12. Engrenage planétaire selon l'une des revendications 6 à 11, **caractérisé en ce que** les moyens de fixation (14a, 14b) sont prévus sous la forme d'une bague de serrage, qui est prévue dans un évidement de l'arbre d'entraînement (13) et qui présente dans le deuxième état un plus petit diamètre extérieur maximal que dans le premier état.

13. Engrenage planétaire selon la revendication 12, **caractérisé en ce que** l'évidement est fourni de telle sorte qu'une bague de serrage non serrée, en tant que moyen de fixation, réalise dans le premier état la liaison positive de l'arbre d'entraînement (13) avec une partie de boîtier (11) entourant cet arbre, sachant que la bague serrée, en tant que moyen de fixation, réalise dans le deuxième état la liaison à force de l'arbre d'entraînement (13) avec l'arbre du dispositif d'entraînement.

14. Engrenage planétaire selon l'une des revendications 6 à 13, **caractérisé en ce que** le dispositif d'entraînement est un moteur électrique et l'arbre du dispositif d'entraînement est l'arbre de rotor de ce moteur.

15. Engrenage planétaire selon l'une des revendications 6 à 14, **caractérisé en ce qu'**il est prévu une bague d'étanchéité d'arbre (15) du côté d'entrée entre la roue solaire et les moyens de fixation.

16. Engrenage planétaire selon la revendication 15, **caractérisé en ce que** la bague d'étanchéité d'arbre du côté d'entrée assure l'étanchéité entre la partie de boîtier et l'arbre d'entraînement (13), sachant que la surface de portée de la bague d'étanchéité d'arbre sur l'arbre d'entraînement est prévue sur un diamètre inférieur au diamètre que l'arbre d'entraînement présente plus loin du côté d'entrée.

17. Engrenage planétaire selon au moins une des revendications 6 à 16, **caractérisé en ce que** la partie de boîtier présente un collet de centrage du côté d'entrée.

18. Engrenage planétaire selon au moins une des revendications 6 à 17, **caractérisé en ce que** le dispositif d'entraînement peut être relié au moyen de vis de fixation.

19. Entraînement, comprenant un engrenage planétaire et un moteur électrique entraînant ce dernier, **caractérisé en ce que** l'engrenage planétaire est réalisé selon l'une des revendications 6 à 18.

20. Procédé de montage d'un premier dispositif sur un deuxième dispositif, sachant que les deux dispositifs comprennent chacun un boîtier et chacun un arbre, sachant que le premier dispositif comprend un premier et un deuxième moyens de fixation (14a, 14b), sachant que l'arbre du premier dispositif comprend des moyens pour recevoir l'arbre du deuxième dispositif,
**caractérisé en ce que**
au cours d'une première étape, le premier et le deuxième moyens de fixation (14a, 14b) bloquent en rotation et en translation l'arbre (13) du premier dispositif dans le boîtier (11) du premier dispositif,
au cours d'une deuxième étape, l'arbre du deuxième dispositif est introduit dans les moyens de réception du premier arbre,
au cours d'une troisième étape, le boîtier (11) du premier dispositif est fixement assemblé au boîtier du deuxième dispositif,
au cours d'une quatrième étape, le premier moyen de fixation (14a, 14b) est actionné de telle sorte que sa liaison avec le boîtier est supprimée et qu'on réalise une liaison solidaire en rotation et en translation de l'arbre du premier dispositif avec l'arbre du deuxième dispositif,
au cours d'une cinquième étape, le deuxième moyen de fixation (14a, 14b) est actionné de telle sorte que sa liaison avec le boîtier est supprimée.

21. Procédé selon la revendication 20, **caractérisé en ce que**, au cours de la cinquième étape, le deuxième moyen de fixation est actionné de telle sorte qu'on réalise une liaison solidaire en translation de l'arbre du premier dispositif avec l'arbre du deuxième dispositif.

22. Procédé selon la revendication 20 ou 21, **caractérisé en ce que** le deuxième dispositif est un moteur électrique.

23. Procédé selon la revendication 20 ou 21, **caractérisé en ce que** le premier et/ou le deuxième dispositif est une transmission ou un embrayage.
